Europäisches Patentamt

European Patent Office

Office européen des brevets

(19)

(11) **EP 0 988 728 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **98936126.6**

(22) Anmeldetag: **10.06.1998**

(51) Int Cl.$^{7}$: **H04L 1/00**

(86) Internationale Anmeldenummer:
**PCT/DE1998/001579**

(87) Internationale Veröffentlichungsnummer:
**WO 1998/058467 (23.12.1998 Gazette 1998/51)**

(54) **QUELLENGESTEUERTE KANALDECODIERUNG DURCH VERWENDUNG DER INTRA-RAHMEN-KORRELATION**

SOURCE-CONTROLLED CHANNEL DECODING USING INTRA-FRAME CORRELATION

DECODAGE CANAL PILOTE PAR LA SOURCE PAR CORRELATION ENTRE TRAMES

(84) Benannte Vertragsstaaten:
**DE FR GB IT**

(30) Priorität: **13.06.1997 DE 19725131**

(43) Veröffentlichungstag der Anmeldung:
**29.03.2000 Patentblatt 2000/13**

(73) Patentinhaber: **SIEMENS AKTIENGESELLSCHAFT 80333 München (DE)**

(72) Erfinder:
 • **XU, Wen**
  **D-85221 Dachau (DE)**
 • **HINDELANG, Thomas**
  **D-87640 Biessenhofen (DE)**
 • **RUSCITTO, Alfredo**
  **I-10131 Torino (IT)**

(56) Entgegenhaltungen:
 **EP-A- 0 727 890      EP-A- 0 800 280**
 **GB-A- 2 305 827**

 • **HAGENAUER J: "SOURCE-CONTROLLED CHANNEL DECODING" IEEE TRANSACTIONS ON COMMUNICATIONS, Bd. 43, Nr. 9, September 1995, Seiten 2449-2457, XP000525669 in der Anmeldung erwähnt**
 • **JOERESSEN O J ET AL: "HIGH-SPEED VLSI ARCHITECTURES FOR SOFT-OUTPUT VITERBI DECODING" JOURNAL OF VLSI SIGNAL PROCESSING, Bd. 8, Nr. 2, 1. Oktober 1994, Seite 169-181 XP000483302**
 • **RUSCITTO A ET AL: "CHANNEL DECODING USING RESIDUAL INTRA-FRAME CORRELATION IN A GSM SYSTEM" ELECTRONICS LETTERS, Bd. 33, Nr. 21, 9. Oktober 1997, Seite 1754/1755 XP000752306**
 • **HINDELANG T ; RUSCITTO A: "Kanaldecodierung mit Apriori-Wissen bei nicht binären Quellensymbolen" ITG-FACHBERICHT, VDE-VERLAG, GERMANY, Nr. 146, 3. - 5. März 1998, Seiten 163-167, XP002087842**

**Beschreibung**

Die vorliegende Erfindung bezieht sich auf ein Verfahren sowie einen Decodierer zur quellengesteuerten Kanaldecodierung von Daten in einem Rahmenformat.

Quellensignale wie Sprache, Ton, Bild und Fernsehen beinhalten fast immer statistische Redundanz im Sinne einer Korrelation zwischen verschiedenen Bits. Durch die Quellencodierung kann diese Redundanz stark verringert werden, so daß eine effiziente Übertragung bzw. Speicherung des Quellensignals ermöglicht wird. Diese Redundanzreduktion beseitigt vor der Übertragung redundante Signalinhalte, die auf der Vorkenntnis von z.B. statistischen Parametern des Signalverlaufs beruhen. Nach der Übertragung werden diese Anteile dem Signal wieder zugesetzt, so daß objektiv kein Qualitätsverlust nachweisbar ist. Aufgrund der unvollständigen Kenntnisse über die Quellensignale oder Einschränkungen bei der Komplexität des Codierverfahrens ist die Quellencodierung üblicherweise nur suboptimal realisierbar, d.h. in den komprimierten Daten ist auch nach der Codierung noch eine gewisse Redundanz vorhanden.

Auf der anderen Seite ist es bei der Signalübertragung notwendig, gezielt Redundanz durch Kanalcodierung wieder hinzuzufügen, um die Beeinflussung der Übertragung durch Kanalstörungen weitgehend zu beseitigen. Durch zusätzliche redundante Bits wird es somit dem Empfänger ermöglicht, ohne Mitwirkung des Senders Fehler zu erkennen und eventuell auch zu korrigieren.

Lange Zeit war es eine der grundlegenden Prämissen der Informationstheorie, daß die Quellencodierung und die Kanalcodierung unabhängig voneinander ausgeführt werden können, um ein optimales Ergebnis zu erzielen. Gemäß dieser Grundlage hängt die Auslegung des Quellen-Decodierers nur von den Quelleneigenschaften ab, wohingegen das Kanalcodierungsschema nur von den Kanaleigenschaften abhängen soll. Dieser Grundsatz kann richtig sein, wenn der Quellen-Codierer statistisch unabhängige und somit nicht korrelierte sowie gleich wahrscheinliche Ergebnisse liefert und die Decodierverzögerung beliebig groß werden kann. In der praktischen Anwendung sind indessen in der Regel diese Voraussetzungen nicht erfüllt. Das Ausgangssignal des Quellen-Codierers weist oft eine Restredundanz auf, und gleichzeitig ist die erlaubte Verzögerung insbesondere bei Sprachübertragung beschränkt.

Es ist bekannt, diese Restredundanz der quellencodierten Daten bei der sogenannten quellengesteuerten Kanaldecodierung auszunutzen, um weitere Bitfehler zu korrigieren. Dabei wird der Decodiervorgang des Kanaldecoders einerseits durch die übertragenen Codebits und andererseits durch eine A-priori-/A-posteriori-Information über den wahrscheinlichsten Wert einiger wichtiger Quellenbits gesteuert. Die Quelleninformation hat also einen Einfluß auf den Ablauf der Kanaldecodierung. Im Falle der Viterbi-Algorithmus-Decodierung wird dieses Verfahren als A-priori-Viterbialgorithmus bezeichnet. Bei Verwendung eines solchen Verfahrens ist eine Modifikation nur seitens des Empfängers notwendig.

Aus der DE-A- 42 24 214 und der Druckschrift J. Hagenauer, "Source-controlled channel decoding", IEEE Trans. Commun., Band 43, Seiten 2449 - 2457, September 1995 ist es bekannt, bei der quellengesteuerten Kanalcodierung die Inter-Rahmen-Korrelation, d.h. die statistische Abhängigkeit zwischen zeitlich und/oder örtlich benachbarten Signalsamples auszunutzen.

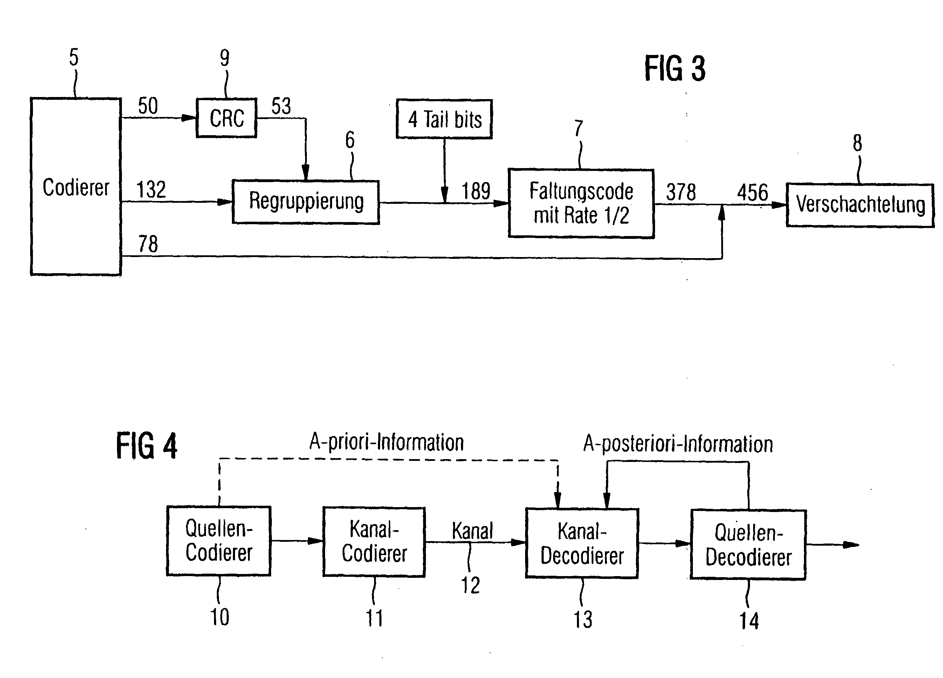

Bezugnehmend auf Fig. 4 soll nun dieses bekannte Verfahren näher erläutert werden. Wie in Fig. 4 ersichtlich, wird gemäß diesem bekannten Verfahren ein Signal zuerst quellencodiert 10, dann kanalcodiert, über einen Übertragungskanal 12 übertragen, kanaldecodiert 13 und schließlich quellendecodiert 14. Weiterhin erfolgt die Kanaldecodierung quellengesteuert unter Verwendung einer A-priori- und einer A-posteriori-Information hinsichtlich der Quellen.

Dabei wird aus der Statistik der Quelle und den bereits entschiedenen Informationen nachträglich (a-posteriori) eine Zuverlässigkeit berechnet, die in einem nächsten Schritt von vornherein (a-priori) eine Wahrscheinlichkeit für eine Entscheidung bestimmt. Die a-posteriori Information kann dabei direkt nach dem Kanaldecodierer, aber auch erst nach dem Quellendecodierer gewonnen werden.

Im folgenden werden parametrische Codierverfahren behandelt. Dabei wird der von der Quelle erzeugte Bitstrom (z.B. Sprache) in Blöcke unterteilt (z. B. zeitliche Rahmen) und diese werden getrennt bearbeitet. Die Quellencodierung liefert sogenannte Parameter (z. B. Sprachkoeffizienten), die die Eigenschaften der Quelle im aktuellen Block auf eine gewisse Weise widerspiegeln (z. B. Spektrum der Sprache, Filterparameter) und die mit einer gewissen Anzahl von Bits quantisiert werden.

Dabei wird insbesondere eine Korrelation der Quellenbits berücksichtigt. Die grundlegende Idee dieses bekannten Verfahrens besteht dabei darin, daß sich die höchstwertigen Bits eines Parameters zwischen zwei aufeinanderfolgenden Rahmen nicht sehr oft ändern und somit eine Redundanz bei der Übertragung vorliegt. Diese Korrelation zwischen aufeinanderfolgenden Rahmen kann empfängerseitig unter Verwendung eines APRI-SOVA (A-priori-Weichentscheidungs-Viterbi-Algorithmus)-Decodierers ausgenutzt werden. Bei einem Weichentscheidungsdecodierer wird nicht nur die eigentliche Entscheidung, sondern auch die Zuverlässigkeit der Entscheidung berücksichtigt. Zusammengefaßt erfolgt also gemäß diesem bekannten verfahren eine quellengesteuerte Kanaldecodierung unter Verwendung der Inter-Rahmen-Korrelation.

Indessen hat es sich herausgestellt, daß aufgrund der ungleichen Verteilung der Parameterwerte, die wiederum auf die Nichtstationarität der Quellensignale insbesondere bei der Sprachübertragung zurückzuführen ist, eine Restredundanz nicht nur zwischen Bits aufeinanderfolgender Rahmen (Inter-Rahmen-Korrelation), sondern auch zwischen den Bits eines Parameters innerhalb eines Rahmens vorliegen kann. Diese Redundanz hinsichtlich Bits verschiedener Rahmen wird als Intra-Rahmen-Redundanz bezeichnet.

Die vorliegende Erfindung hat zur Aufgabe, eine effektive Decodierung mit geringem Aufwand zu erreichen.

Die oben genannte Aufgabe wird erfindungsgemäß durch die Merkmale der unabhängigen Ansprüche gelöst.

Zentraler Gedanke der Erfindung ist es dabei, die Intra-Rahmen-Korrelation bei der Kanaldecodierung zur Erhöhung der Störungssicherheit und zur besseren Fehlerkorrektur auszunutzen.

Gemäß der Erfindung ist also ein Verfahren zur quellengesteuerten Kanaldecodierung von Daten in einem Rahmenformat vorgesehen. Dabei wird zuerst ein Rahmenkanal decodiert. Dieser kanaldecodierte Rahmen kann dann quellendecodiert werden, um eine A-posteriori-Korrelationsinformation hinsichtlich der Daten des kanaldecodierten Rahmens zu ermitteln. Ferner kann als Alternative auch direkt aus den entschiedenen Informationen des Kanaldecodierers und deren Zuverlässigkeit eine Information berechnet werden, die im folgenden A-priori-Information genannt wird. In einem zweiten Kanal-Decodierungsschritt wird dann derselbe Rahmen wie zuvor, aber diesmal unter Verwendung der berechneten A-priori-Information basierend auf der Korrelation und der Restredundanz nochmals kanaldecodiert.

Zur Kanaldecodierung kann insbesondere ein Weichentscheidungs-Viterbi-Algorithmus und ein A-posteriori-Maximalwahrscheinlichkeits-Algorithmus verwendet werden. Ein Weichentscheidungs-Algorithmus ist dabei ein Algorithmus, der nicht nur einen Entscheidungswert ausgibt, sondern weiterhin auch angibt, mit welcher Wahrscheinlichkeit der entschiedene Wert vorliegt.

Das genannte Verfahren läßt sich insbesondere auf die Decodierung des Sprachkanals des GSM-Standards anwenden. Gemäß der Erfindung ist weiterhin ein Kanaldecodierer für codierte Daten in einem Rahmenformat vorgesehen. Dabei ist ein Kanal-Decodierer vorgesehen, der gemäß einem Beispiel zuerst einen Rahmen ohne A-priori-Information decodiert. Der Kanaldecodierer kann aber auch bereits bei dieser ersten Decodierung eine ihm zugeführte A-priori-Information verwerten. Die A-posteriori-Information kann wahlweise durch einen Quellen-Decodierer oder direkt von dem Kanaldecodierer ermittelt werden.

Eine Berechnungseinheit ermittelt auf Grundlage der A-posteriori-Information und ggf. einer Quelleninformation/statistik eine A-priori-Information, die dem Kanal-Decodierer zugeführt wird. Der Kanal-Decodierer decodiert dann nochmals denselben Rahmen wie zuvor unter Verwendung der A-priori-Information von der Berechnungseinheit.

Für den Kanaldecodierer kann jeder beliebige Algorithmus verwendet werden. Besonders vorteilhaft ist jedoch ein Algorithmus, der neben der eigentlichen Entscheidung eine Zuverlässigkeitsinformation ausgibt, wie es z.B. bei einem Weichentscheidungs-Viterbi-Decodierer oder einem A-posteriori-Maximalwahrscheinlichkeits-Decodierer der Fall ist.

Erfindungsgemäß ist weiterhin eine Kanalcodierer/Decodierer-Einheit vorgesehen, die einen Decodierer der zuvor genannten Art aufweist. Weiterhin kann diese Kanalcodierer/Decodierer-Einheit einen Codierer aufweisen, der die Daten eines Rahmens abhängig von ihrer Bedeutung für eine erfolgreiche Übertragung mit unterschiedlichem Fehlerschutz versieht (unequal error protection scheme).

Die Erfindung wird nun bezugnehmend auf die Figuren der begleitenden Zeichnungen sowie anhand eines Ausführungsbeispiels näher erläutert. Es zeigen:

Fig. 1 den Aufbau eines erfindungsgemäßen quellengesteuerten Kanaldecodierers,

Fig. 2 einen Rahmen mit Bits, die eine gewisse Korrelation aufweisen,

Fig. 3 einen Kanalcodierer, wie er gemäß einem speziellen Ausführungsbeispiel der Erfindung zusammen mit dem Decodierer von Fig. 1 als Codierer/Decodierer (Codec)-Einheit verwendet werden kann und

Fig. 4 den Aufbau einer Codierer/Decodierer-Einheit gemäß dem Stand der Technik.

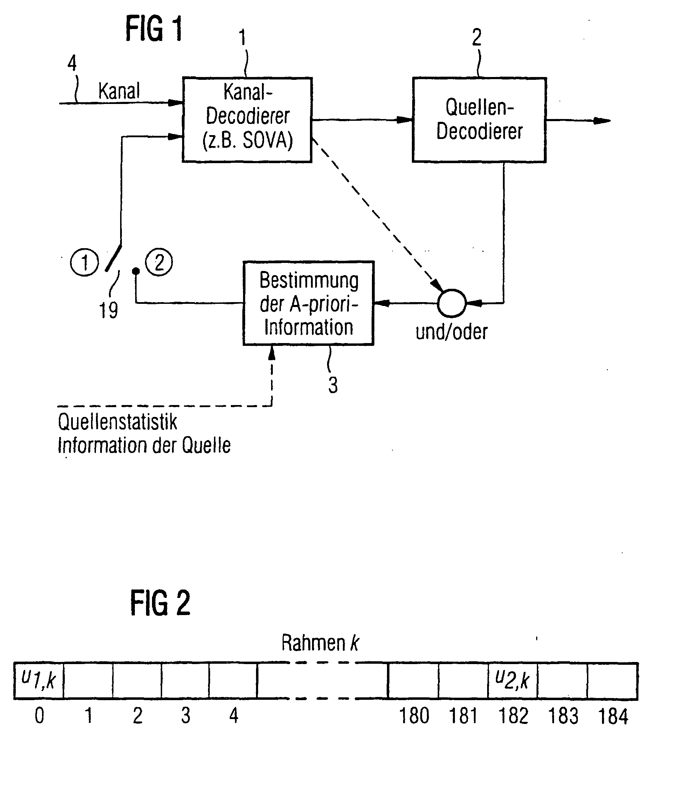

Bezugnehmend auf Fig. 1 der Zeichnungen soll zuerst der grundlegende Aufbau eines erfindungsgemäßen quellengesteuerten Kanaldecodierers erläutert werden. Wie bereits eingangs ausgeführt, wird gemäß der Erfindung die Restredundanz zwischen Bits eines Parameters innerhalb eines Rahmens zur quellengesteuerten Kanaldecodierung ausgewertet. Um diese Intra-Rahmen-Korrelation der Bits zu ermitteln, wird gemäß der Erfindung ein Verfahren basierend auf der wiederholten Kanaldecodierung vorgeschlagen. Wie in Fig. 1 dargestellt, werden codierte Daten in einem Rahmenformat, wie beispielsweise dem GSM-Standard, über einen Übertragungskanal 4 einem Kanaldecodierer 1 zugeführt. Dieser Kanaldecodierer 1 kann beispielsweise ein sogenannter SOVA-(Weichentscheidungs-Viterbi-Algorithmus)- oder ein MAP- (A-posteriori-Maximalwahrscheinlichkeits-) Decodierer sein. Bei diesen Decodierern wird das empfangene Signal mit allen grundsätzlich möglichen Signalen verglichen und dann das Signal ausgewählt, das dem empfangenen Signal am ähnlichsten ist. Dieser Kanal-Decodierer 1 decodiert also die über den Übertragungskanal 4 zugeführten codierten Daten gemäß diesem Beispiel ohne Verwendung einer A-priori-Information. Er kann indessen auch bereits bei dieser ersten Decodierung eine ihm zugeführte A-priori-Information verwerten.

Mit 19 ist in Fig. 1 ein symbolischer Schalter dargestellt, der im ersten Decodierungsschritt des Kanal-Decodierers 1 auf der Stellung ① steht. Nach dieser ersten Kanaldecodierung durch den Kanal-Decodierer 1 ohne A-priori-Korrelationsinformation kann dieses decodierte Signal einem Quellendecodierer 2 zugeführt werden. Der Quellendecodierer 2 führt eine Quellendecodierung der zugeführten Daten von dem Kanaldecodierer 1 aus, um eine A-posteriori-Information zu gewinnen. Alternativ oder zusätzlich kann die A-posteriori-Information auch direkt nach dem Kanaldecodierer 1 entnommen werden, wie durch eine unterbrochene Linie dargestellt ist. Diese A-posteriori-Information wird zu einer Einheit 3 gegeben, die auf Grundlage der A-posteriori-Information eine A-priori-Information berechnet, wie weiter unten im Detail ausgeführt wird. Diese A-priori-Information von der Einheit 3 wird dann dem Kanal-Decodierer 1 zugeführt. Der symbolische Schalter 19 steht sozusagen auf der Stellung ② . Nun führt der Kanal-Decodierer 1 mit demselben Rahmen wie bereits zuvor eine Kanal-Decodierung aus, aber diesmal unter Berücksichtigung der A-priori-Information von der Einheit 3. Bei der zweiten Kanal-Decodierung wird also eine quellengesteuerte Kanaldecodierung ausgeführt.

Zusammenfassend ist somit zu sagen, daß im ersten Schritt zur Decodierung eines Rahmens vorzugsweise eine Decodierung ohne Berücksichtigung der A-priori-Information eingesetzt wird. Anhand der decodierten Parameter kann dann eine A-posteriori-Information, d.h. eine Intra-Rahmen-Korrelation, für das decodierte Bit ermittelt werden. Im zweiten Schritt wird der empfangene Rahmen dann nochmals decodiert, wobei diesmal die in der vorherigen Decodierung gewonnene A-priori-Information verwendet wird.

Dieses Verfahren ist im Prinzip bei allen Kanaldecodierungen einsetzbar, sofern eine Intra-Rahmen-Korrelation bei den Quellenbits (Sprache, Bild, Daten, etc.) vorhanden ist, wie es beispielsweise bei der Decodierung der Kontroll-Informationsdaten für den GSM-Kontrollkanal (z.B. SACCH) der Fall ist. Insbesondere bei der GSM-Full-Rate bzw. bei der Enhanced Full-Rate-Sprachcodierung kann dieses Verfahren eine weitere Verbesserung der Leistungsfähigkeit gegenüber der quellengesteuerten Kanaldecodierung basierend auf der Inter-Rahmen-Korrelation der Bits erzielen.

Im folgenden wird bezugnehmend auf Fig. 3 ein Codierer beschrieben, wie er bei der vorliegenden Erfindung Anwendung findet. Bei der GSM-Full-Rate-Übertragung von Sprachinformationen ist die Sensitivität des Quellen-Decodierers hinsichtlich der Kanalfehler typischerweise nicht gleichmäßig. Die Qualität der rekonstruierten Sprachinformationen ist gegenüber einer Fehlerbeeinträchtigung von gewissen Typen an Bits ziemlich unsensibel, wohingegen sich die Qualität der Sprache stark verschlechtert, wenn Fehler einer anderen Klasse beeinträchtigt werden. Der Sprach-Codierer 6 erzeugt alle 20 Millisekunden einen Rahmen mit 260 Bit. Jeder Rahmen kann in drei Bit-Klassen mit einer unterschiedlichen Bedeutung und Sensitivität eingeteilt werden. Die Kanal-Codiervorgänge sind so entwickelt, daß die geringste Bit-Fehler-Wahrscheinlichkeit in der wichtigsten Klasse auftritt. Gemäß dem Kanalcodierungsschema von Fig. 3 werden zuerst die 50 wichtigsten Bits (Klasse 1a) durch 3 Bits einer zyklischen Blocksicherheit (CRC) gesichert (9). Die nächsten 132 wichtigen Bits (Klasse 1b) werden mit den zuvor genannten 53 Bits regruppiert (6) und zusammen mit 4 Tail-Bits mit einer Rate 1/2 faltungscodiert (7). Die 78 weniger wichtigen Bits (Klasse 2) werden uncodiert übertragen.

Bezugnehmend auf Fig. 2 soll nun die Bestimmung der Intra-Rahmen-Korrelation näher erläutert werden. Wie zuvor ausgeführt ist jeder Koeffizient, der durch den Sprachcodierer 6 von Fig. 3 ausgegeben wird, mit einer unterschiedlichen Anzahl an Bits entsprechend seiner Bedeutung quantisiert. In Fig. 2 sind mit $u_{1,k}$ und $u_{2,k}$ die beiden wichtigsten Bits eines gewissen Koeffizienten zum Zeitpunkt k bezeichnet. Aufgrund der Rest-Redundanz an dem Ausgang des Quellen-Codierers sind die Bits $u_{1,k}$ und $u_{2,k}$ innerhalb desselben Rahmens statistisch nicht unabhängig. Das heißt, zwischen diesen Bits $u_{1,k}$ und $u_{2,k}$ liegt eine Korrelation vor. Die Restkorrelation innerhalb des gleichen Rahmens kann wie folgt ausgedrückt werden:

$$\text{Gleichung 1:} \qquad u_{1,k} = f(u_{2,k})$$

$$\text{Gleichung 2:} \qquad u_{2,k} = f(u_{1,k})$$

so daß die A-priori-Wahrscheinlichkeiten hinsichtlich $u_{1,k}$ und $u_{2,k}$ wie folgt ausgedrückt werden können:

$$\text{Gleichung 3: } P(u_{1,k} = i) = \sum_{j \in \{-1,+1\}} P(u_{1,k} = i \mid u_{2,k} = j) \cdot P(u_{2,k} = j)$$

$$\text{Gleichung 4: } P(u_{2,k} = i) = \sum_{j \in \{-1,+1\}} P(u_{2,k} = i \mid u_{1,k} = j) \cdot P(u_{1,k} = j)$$

(wobei $i,j \in \{-1;+1\}$)

In diesem Fall kann die A-priori-Information als eine Kombination der A-posteriori-Information sowie der Quellen-Eigenschaften erhalten werden. Indessen ist zu bemerken, daß bei der Inter-Rahmen-Korrelation die A-posteriori-Wahrscheinlichkeiten empfängerseitig verfügbar sind, da die A-posteriori-Information erst im nächsten Rahmen verwendet wird, um eine Aussage über das Bit $u_{q,k+1} = f(u_{q,k})$ zu treffen. Wie aus Fig. 2 ersichtlich ist, ist indessen im Fall der erfindungsgemäßen Verwendung der Intra-Rahmen-Redundanz die A-posteriori-Infomation $P(u_{2,k} = j)$ noch nicht verfügbar, wenn der Decodierer das Informationsbit $u_{1,k}$ verarbeitet. Zur Umgehung dieses Problems wird der bereits oben ausgeführte Decodier-Algorithmus verwendet:

Schritt 1:

Der gesamte empfangene Rahmen wird durch einen Decodierer vorzugsweise ohne A-priori-Information verarbeitet. Indessen kann der Decodierer auch bereits bei diesem ersten Schritt eine ihm zugeführte A-priori-Information verwerten. Die A-posteriori-Wahrscheinlichkeiten der korrelierten Bits werden zur Berechnung der neuen A-priori-Information gemäß Gleichungen 3 und 4 verwendet.

Schritt 2:

Der empfangene Rahmen wird nochmals decodiert, wobei diesmal ein APRI-SOVA-Decodierer zur Auswertung der A-priori-Information verwendet wird, die in dem vorherigen Schritt berechnet wurde.

Die Wahrscheinlichkeiten $P(u_{1,k} = i \mid u_{2,k} = j)$ und $P(u_{2,k} = i \mid u_{1,k} = j)$, die die Quelleneigenschaften beschreiben, können in der folgenden Weise empfängerseitig leicht abgeschätzt werden. Dem Paar $(u_{1,k}, u_{2,k})$ wird das Symbol $S_k \in (0, 1, 2, 3)$ gemäß der folgenden Binärbildung zugeordnet.

$$\text{Gleichung 5: } \quad (-1, -1) \leftrightarrow 0$$

$$(-1, +1) \leftrightarrow 1$$

$$(+1, -1) \leftrightarrow 2$$

$$(+1, +1) \leftrightarrow 3$$

Unter der Annahme, daß mittels der getroffenen Entscheidungen aus dem letzten 1 Rahmen (1 bezeichnet eine Größe eines Fensters, wobei 1 beispielsweise für GSM-Fullrate 128 oder 256 betragen kann) die Wahrscheinlichkeiten P(0), P(1), P(2) und P(3) der Symbole $S_k$ abgeschätzt wurden, die zuvor erhalten wurden, können die Quelleneigenschaften berechnet werden. Die Wahrscheinlichkeit für das Auftreten eines Symbols wird also abhängig von den letzten 1 Rahmen geschätzt. Die Größe 1 wird dabei abhängig von den Eigenschaften der Quelle, wie z. B. Korrelation oder Stationarität gewählt.

$$\text{Gleichung 6:}$$

$$P(u_{1,k} = -1 \mid u_{2,k} = -1) = \frac{P(0)}{P(0) + P(2)}$$

$$P(u_{1,k} = +1 | u_{2,k} = -1) = \frac{P(2)}{P(0)+P(2)}$$

$$P(u_{1,k} = -1 | u_{2,k} = +1) = \frac{P(1)}{P(1)+P(3)}$$

$$P(u_{1,k} = +1 | u_{2,k} = +1) = \frac{P(3)}{P(1)+P(3)}$$

$$P(u_{2,k} = -1 | u_{1,k} = -1) = \frac{P(0)}{P(0)+P(1)}$$

$$P(u_{2,k} = +1 | u_{1,k} = -1) = \frac{P(1)}{P(0)+P(1)}$$

$$P(u_{2,k} = -1 | u_{1,k} = +1) = \frac{P(2)}{P(2)+P(3)}$$

$$P(u_{2,k} = +1 | u_{1,k} = +1) = \frac{P(3)}{P(2)+P(3)}$$

Es ist leicht ersichtlich, daß, wenn die Symbole $S_k$ nicht gleichmäßig wahrscheinlich verteilt sind, die Bits $u_{1,k}$ und $u_{2,k}$ nicht statistisch unabhängig sind und somit eine Korrelation vorliegt. Diese statistische Abhängigkeit zwischen Bits innerhalb des gleichen Rahmens wird wie oben ausgeführt zur Verbesserung der Leistungsfähigkeit des Decodierers verwendet.

Da Sprachinformationen einen hoch-nichtstationären Vorgang darstellen, können sich die Quelleneigenschaften während einer bestimmten Zeitdauer stark ändern. Die Aufgabe des Verschiebefensters ist es daher, die Wahrscheinlichkeiten der Symbole $S_k$ für das aktuelle Sprachsegment abzuschätzen.


**Patentansprüche**

1. Verfahren zur quellengesteuerten Kanaldecodierung von Daten in einem Rahmenformat, **gekennzeichnet durch** die folgenden Schritte:

   - Kanal-Decodierung (1) eines Rahmens von Daten,
   - Ermittlung von A-posteriori-Information auf Grundlage einer Zuverlässigkeitsentscheidung der Kanaldecodierung (1) und/oder einer auf die Kanaldecodierung (1) folgenden Quellendecodierung (2),
   - Berechnung (3) von A-priori-Information auf Grundlage der A-posteriori-Information und einer Restredundanz der Daten, und
   - nochmalige Kanal-Decodierung (1) desselben Rahmens unter Verwendung der berechneten (3) A-priori-Information.

2. Verfahren nach Anspruch 1, **dadurch gekennzeichnet, daß** die A-priori-Information auf Grundlage der A-posteriori-Information und/oder einer Quelleninformation ermittelt wird.

3. Verfahren nach Anspruch 2, **dadurch gekennzeichnet, daß** zur Ermittelung der Quelleneigenschaften die letzten 1 Rahmen berücksichtigt werden, wobei 1 den Wert 128 oder 256 annimmt

4. Anwendung eines Verfahrens nach einem der vorhergehenden Ansprüche, **dadurch gekennzeichnet, daß** es auf die Decodierung des Sprachkanals des GSM-Standards angewendet wird.

5. Kanaldecodierer für Daten in einem Rahmenformat, **gekennzeichnet durch**:

   - einen Kanal-Decodierer (1), der einen Rahmen decodiert, um **durch** eine Zuverlässigkeitsentscheidung eine A-posteriori-Information hinsichtlich der Daten des einen kanaldecodierten Rahmens zu ermitteln, oder einem Quellendecodierer (2) Informationen zur Ermittlung der A-posteriori-Information übergibt,
   - eine Berechnungseinheit (3), die A-priori-Information auf Grundlage der A-posteriori-Information ermittelt und die ermittelte A-priori-Information dem Kanal-Decodierer (1) zuführt, wobei der Kanal-Decodierer (1) denselben Rahmen nochmals unter Verwendung der A-priori-Information decodiert.

**6.** Kanaldecodierer nach Anspruch 5,
**dadurch gekennzeichnet,**
**daß** ein Quellendecodierer (2) vorgesehen ist, und die A-posteriori-Information alternativ oder zusätzlich am Ausgang des Quellendecodierers (2) entnommen wird.

**7.** Kanaldecodierer nach einem der Ansprüche 5 oder 6,
**dadurch gekennzeichnet,**
**daß** die A-priori-Information auf Grundlage der A-posteriori-Information und /oder einer Quelleninformation ermittelt ist.

**8.** Kanaldecodierer nach Anspruch 7,
**dadurch gekennzeichnet,**
**daß** zur Ermittlung der Quelleneigenschaften die letzten 1 Rahmen berücksichtigt sind, wobei L den Wert 128 oder 256 annimmt.

## Claims

**1.** Method for source-controlled channel decoding of data in a frame format,
**characterized by** the following steps.

- Channel decoding (1) of a frame of data.
- Determination of a posteriori information on the basis of a reliability decision of the channel decoding (1) and/ or a source decoding (2) following the channel decoding (1).
- Calculation (3) of a priori information on the basis of a posteriori information and a residual redundancy of data.
- Channel decoding (1) of the same frame again, using the calculated (3) a priori information.

**2.** Method in accordance with claim 1,
**characterized in that**
the a priori information is determined on the basis of the a posteriori information and/or source information.

**3.** Method in accordance with claim 2,
**characterized in that**
the last 1 frame is taken into account when determining the source properties, with one assuming the value 128 or 256.

**4.** Application of a method in accordance with one of the preceding claims,
**characterized in that**
that it is used for the decoding of the voice channel of the GSM standard.

**5.** Channel decoder for data in a frame format,
**characterized by**

- a channel decoder (1) that decodes a frame in order to determine by a reliability decision a posteriori information with regard to the data of a channel decoded frame, or supplies information to a source decoder (2) for determining the a posteriori information,
- a calculation unit (3) that determines the a priori information on the basis of a posteriori information and supplies the determined a priori information to the channel decoder (1), with the channel decoder (1) decoding the same frame again using the a priori information.

**6.** Channel decoder in accordance with claim 5,
**characterized in that**
a source decoder (2) is provided and the a posteriori information is taken either alternatively or additionally at the output of the source decoder (2).

**7.** Channel decoder in accordance with one of claims 5 or 6,

**characterized in that**
the a priori information is determined on the basis of a posteriori information and/or a source information.

8. Channel decoder in accordance with claim 7,
**characterized in that**
the last 1 frame is taken into account when determining the source properties, with 1 assuming the value 128 or 256.


**Revendications**

1. Procédé de décodage canal piloté par la source de données dans un format de trame, **caractérisé par** les étapes suivantes :

   - décodage canal (1) d'une trame de données,
   - détermination d'une information a posteriori sur la base d'une décision de fiabilité du décodage canal (1) et/ou d'un décodage source (2) subséquent au décodage canal (1),
   - calcul (3) d'une information a priori sur la base de l'information a posteriori et d'une redondance résiduelle des données, et
   - nouveau décodage canal (1) de la même trame à l'aide de l'information a priori calculée (3).

2. Procédé selon la revendication 1, **caractérisé en ce qu'**on détermine l'information a priori sur la base de l'information a posteriori et/ou d'une information source.

3. Procédé selon la revendication 2, **caractérisé en ce que** pour déterminer les propriétés source on tient compte des I dernières trames, I prenant la valeur 128 ou 256.

4. Application d'un procédé selon l'une des revendications précédentes, **caractérisée en ce qu'**il est appliqué au décodage du canal vocal du standard GSM.

5. Décodeur canal pour données dans un format de trame, **caractérisé par** :

   - un décodeur canal (1) qui décode une trame par une décision de fiabilité pour déterminer une information a posteriori relative aux données de ladite une trame décodée ou qui transmet des informations à un décodeur source (2) pour déterminer l'information a posteriori,
   - une unité de calcul (3) qui détermine une information a priori sur la base de l'information a posteriori et qui amène l'information a priori déterminée au décodeur canal (1), ledit décodeur canal (1) décodant la même trame une nouvelle fois à l'aide de l'information a priori.

6. Décodeur canal selon la revendication 5, **caractérisé en ce qu'**il est prévu un décodeur source (2) et **en ce que** l'information a posteriori, en échange ou en supplément, est prélevée à la sortie du décodeur source (2).

7. Décodeur canal selon l'une des revendications 5 ou 6, **caractérisé en ce que** l'information a priori est déterminée sur la base de l'information a posteriori et/ou d'une information source.

8. Décodeur canal selon la revendication 7, **caractérisé en ce que** pour déterminer les propriétés source les 1 dernières trames sont prises en compte, 1 prenant la valeur 128 ou 256.

# FIG 1

4 Kanal

1

Kanal-
Decodierer
(z.B. SOVA)

2

Quellen-
Decodierer

① / ②

19

Bestimmung
der A-priori-
Information

3

und/oder

Quellenstatistik
Information der Quelle

# FIG 2

Rahmen *k*

| $u_{1,k}$ | | | | | ... | | | $u_{2,k}$ | | |
|---|---|---|---|---|---|---|---|---|---|---|
| 0 | 1 | 2 | 3 | 4 | | 180 | 181 | 182 | 183 | 184 |

**FIG 3**

**FIG 4**

EP 0 988 728 B1